# EUROPEAN PATENT APPLICATION

(11) **EP 4 417 838 A1**
(43) Date of publication of application: **21.08.2024**
(21) Application number: 23382154.5
(22) Date of filing: 17.02.2023
(51) Int. Cl.: F16H 25/22, F16H 25/24

(54) **BALL SCREW DEVICE AND METHOD FOR DESIGNING THE JOINT ELEMENT OF SAID DEVICE**

(71) Applicant: Shuton, S.A., 01170 Legutiano (ES)
(72) Inventor: MIELGO GARCÍA, Roberto, 01170 LEGUTIANO (ES); GONZALEZ FERNANDEZ, Roberto, 01170 LEGUTIANO (ES); CALDERON PUEYO, Jesus, 01170 LEGUTIANO (ES); RAMOS SAN MILLÁN, Erika, 01170 LEGUTIANO (ES); OYANGUREN GARCIA, Aitor, 20500 Arrasate-Mondragon (ES); SANGALLI FUENTES, Luca, 20500 Arrasate-Mondragon (ES); ULACIA GARMENDIA, Ibai, 20500 ARRASATE - MONDRAGON (ES); LARRAÑAGA AMILIBIA, Jon, 20500 ARRASATE - MONDRAGON (ES); ARANA OSTOLAZA, Aitor, 20500 ARRASATE - MONDRAGON (ES)
(74) Representative: Igartua, Ismael

(57) **Abstract**

Ball screw device (100) comprising a shaft (1) and at least two nuts (2). Each nut (2) comprises a plurality of balls which transform the rotary movement of the shaft (1) into a linear movement. The nuts (2) are joined to one another through a joint element (4) which moves integrally with the nuts (2), said joint element (4) being configured to move a load element (5) which causes an axial force (F) on the joint element (4). The joint element (4) is designed to distribute said axial force (F) among all the nuts (2) arranged in the shaft (1), such that each nut (2) supports a predetermined axial load (f1, f2). The invention also relates to the method for designing the joint element (4) of the ball screw device (100).

## Description

### TECHNICAL FIELD

The present invention relates to ball screw devices configured to move a load element, preferably of a large magnitude.

### PRIOR ART

The use of a ball screw to transform a rotary movement into a linear movement is well known. Ball screws usually comprise, on one hand, an axial shaft comprising a threading adapted to allow the rolling of balls, and on the other hand, a nut coupled to the axial shaft and comprising a plurality of balls, such that the nut can move longitudinally in relation to the axial shaft through the balls, transforming the rotary movement of the shaft into a linear movement. The nut usually cooperates with a load element to cause the movement thereof. The load element can be, for example, part of a machine, for example, the moving element of a machine tool, such as the bed or the mold opening and closing system in an injection machine.

Since the ball screw moves by means of the rolling of balls that are in contact between the shaft and the corresponding nut, the ball screw assembly has a low friction. Moreover, since the strain to which the ball screw is subjected is distributed among all the balls, the ball screw is capable of withstanding high thrust loads, the ball screw being suitable for use in applications where a high precision in movement is required, for example, in aircrafts for moving control surfaces, in automobiles with power steering for converting the rotary movement of the electric motor into the axial movement of the steering rack, or in machine tools and robots.

US20020160076A1 describes a ball screw device configured to move a load element which causes an axial force on the device, the device comprising an axial shaft comprising a threading adapted to allow the rolling of balls, and two nuts coupled to the axial shaft and fixed to the load element. Each nut comprises a plurality of balls such that, with the device in use, the nuts can move axially in relation to the axial shaft as a result of the balls, transforming the rotary movement of the axial shaft into a linear movement. The device also comprises a load sensor arranged between the load element and one of the nuts (first nut), and an oil pressure actuator with its corresponding piston arranged between the load element and the other nut (second nut), such that with the device in use, the load sensor measures the load to which the first nut is subjected and transfers same to a control unit so that the piston of the actuator exerts the same load on the second nut in a controlled manner, such that the axial force can be distributed uniformly between the two nuts.

### DISCLOSURE OF THE INVENTION

An object of the invention is to provide a ball screw device, as defined in the claims.

The ball screw device of the invention is configured to move a load element, the device comprising an axial shaft comprising a threading adapted to allow the rolling of balls, and at least two nuts coupled to the axial shaft, such that with the device in use, the nuts can move longitudinally in relation to the axial shaft through a plurality of balls comprised in each nut, transforming the rotary movement of the axial shaft into a linear movement.

The nuts of the invention are joined to one another through a joint element which moves integrally with the nuts, said joint element being configured to move the load element. The load element causes an axial force on the joint element and said joint element is designed to distribute said axial force among all the nuts arranged in the axial shaft, such that each nut supports a predetermined axial load.

Another object of the invention is to provide a method for designing the joint element of the ball screw device of the invention. The method of the invention calculates the rigidity that the joint element must have so that said joint element can transmit the axial load corresponding to each nut.

With the ball screw device and the method of the invention, it is possible to passively distribute the axial force caused by the load element among all the nuts arranged in the axial shaft as a result of the joint element. In other words, there is no need for auxiliary means which measure, for example, the load of one of the nuts in order to act accordingly on the rest of the nuts. These auxiliary means increase the total space required and the cost of the ball screw device, so the device of the invention is more cost-effective. As a result of the invention, each nut supports a predetermined axial load, such that the distribution of the loads of the balls is passively controlled in a uniform manner.

These and other advantages and features of the invention will become apparent in view of figures and detailed description of the invention.

### DESCRIPTION OF THE DRAWINGS

Figure 1 shows a diagram of an embodiment of the ball screw device according to the invention in which the device comprises two nuts.
Figure 2 shows a graphical depiction of the distribution of the loads of the balls of each nut of the device of Figure 1.
Figure 3A shows a diagram of another embodiment of the ball screw device according to the invention in which the device comprises three nuts.
Figure 3B shows a diagram of another embodiment of the ball screw device according to the invention in which the device also comprises three nuts.
Figure 4 shows a graphical depiction of the distribution of the loads of the balls of each nut of the device of Figure 3B.
Figure 5 is a schematic depiction of a ball screw of the prior art with an elongated nut and without depicting the fixing flange.

### DETAILED DISCLOSURE OF THE INVENTION

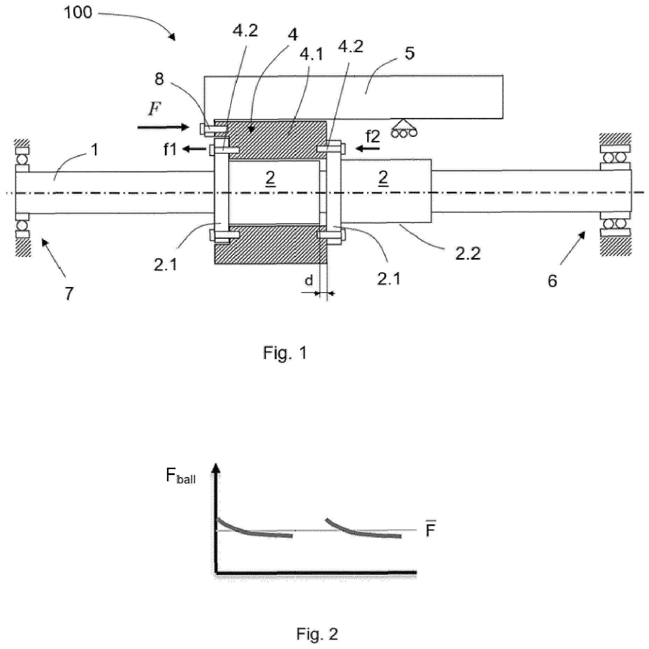

Figure 1 shows a diagram of the preferred embodiment of the ball screw device 100 of the invention. Said device 100 is configured to move a load element 5 that should be able to support a high load. The load element 5 can be, for example, part of a machine, such as for example, the moving element of a machine tool, such as the bed or the mold opening and closing system in an injection machine.

The device 100 of the invention comprises an axial shaft 1 comprising a threading adapted to allow the rolling of balls, and at least two nuts 2 coupled to the axial shaft 1, such that with the device 100 in use, the nuts 2 can move longitudinally in relation to the axial shaft 1 through a plurality of balls (not shown in the figures) comprised in each nut 2, transforming the rotary movement of the axial shaft 1 into a linear movement.

The nuts 2 of the invention are joined to one another through a joint element 4 which moves integrally with the nuts 2, said joint element 4 being configured to move the load element 5. The load element 5 causes an axial force F on the joint element 4 and said joint element 4 is designed to distribute said axial force F among all the nuts 2 arranged in the axial shaft 1, such that each nut 2 supports a predetermined axial load f1, f2.

With the ball screw device 100, it is possible to passively distribute the axial force F caused by the load element 5 among all the nuts 2 arranged in the axial shaft 1 as a result of the joint element 4. In other words, there is no need for auxiliary means which measure, for example, the load of one of the nuts 2 in order to act accordingly on the rest of the nuts 2. These auxiliary means increase the total space required, so the resulting ball screw device would have a larger size compared with the device 100 of the invention. Furthermore, said auxiliary means increase the cost of the ball screw device, so the device 100 of the invention is more cost-effective. As a result of the invention, each nut 2 supports a predetermined axial load f such that the distribution of the loads of the balls (not shown in the figures) is passively controlled so that the distribution of external load among the balls of the ball screw device 100 is more uniform.

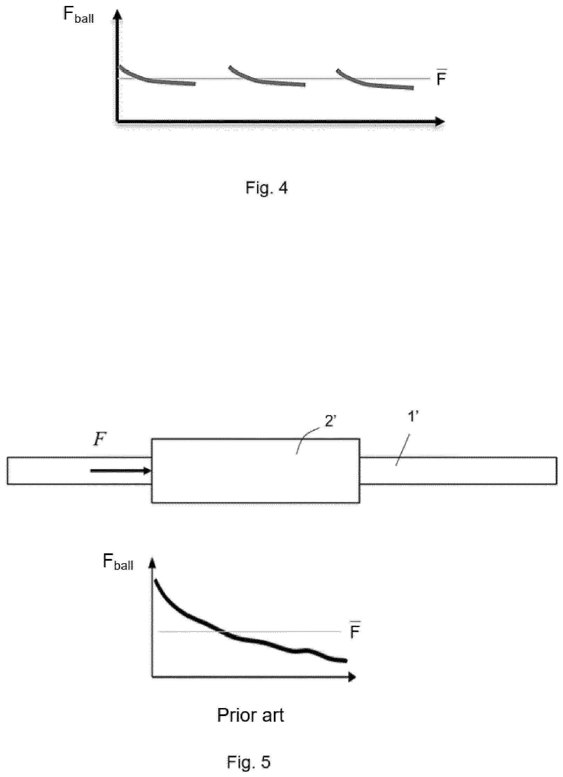

The longer a nut is, the slenderer it will be, and the difference between the load supported by the first ball and the last ball of the nut is greater, as depicted in Figure 5. In said Figure 5, the load supported by the balls at the ends of the nut 2' deviates from the mean load *F̅*, where it is desirable for all the balls interacting with one and the same shaft 1' axial to support the same load so that the ball screw is balanced.

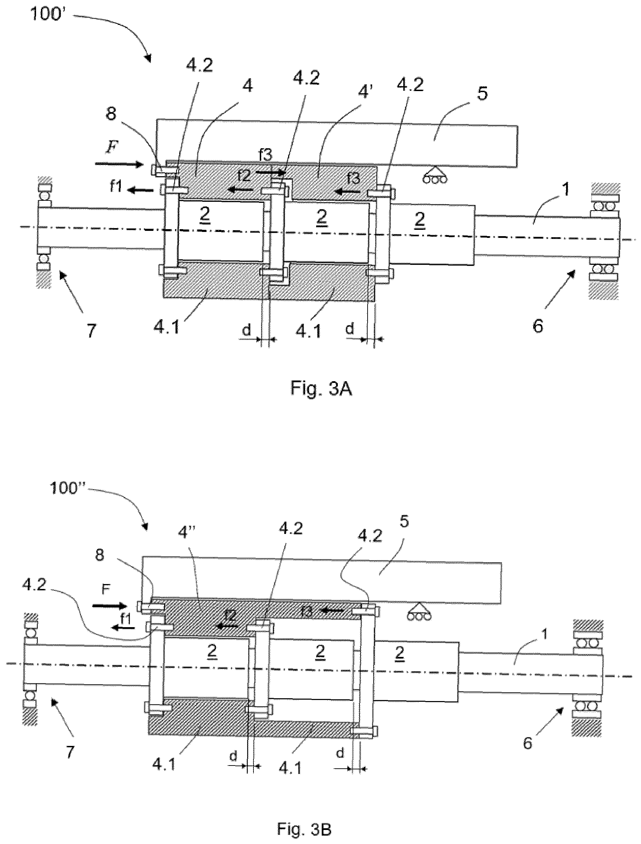

To avoid this problem, the ball screw device 100 of the preferred embodiment of the invention comprises two nuts 2, each nut 2 comprising its corresponding set of balls, not shown in the drawings. In another embodiment of the invention which will be described in detail below, the ball screw device 100' or 100' comprises three nuts 2, as shown in Figures 3A and 3B, although the device of the invention may include more nuts 2.

Splitting the nuts interacting with one and the same axial shaft facilitates, on one hand, the manufacture of said nuts, and enables, on the other hand, increasing the capacity to withstand high thrust loads in the ball screw, due to the fact that the number of balls interacting with the axial shaft of the ball screw is increased. However, for the ball screw to be balanced, all the balls of the ball screw should support a similar load, i.e., the load supported by each ball of the ball screw must be as close as possible to the mean load *F̅*.

In the device 100 of the preferred embodiment of the invention, as a result of the joint element 4, the axial force F caused by the load element 5 is passively distributed among all the nuts 2 of the axial shaft 1, i.e., without having to include auxiliary means that allow adjusting, in use, the load supported by one nut as a result of the load measured in another nut, such that each ball of the ball assembly of the device 100 supports a specific load, said load being the closest possible to the desirable mean load *F̅*, as schematically shown in Figure 2. In other words, with the device 100 of the invention, the difference between the load supported by the first ball and the last ball of each nut 2 is minimized, with the desirable mean load *F̅* of the balls being the same for all the nuts 2 arranged in the same axial shaft 1, thereby achieving a ball screw device 100 with multiple nuts 2 arranged in series, with passive load balancing.

If the nuts 2 of the device 100 of the invention are of the same size, i.e., if they are of the same length, such as in the example of Figure 1, as a result of the joint element 4, the axial load f1 and f2 supported by each nut 2 is the same, where f1=f2=F/2, such that the set of balls of the different nuts 2 must support the same axial load, achieving the balancing of the device 100 of the invention by means of passive load balancing, prolonging the service life of the device 100 in a simple and cost-effective manner.

As shown in Figure 1, the nuts 2 of the device 100 of the invention are arranged in series, i.e., one after another, and with the same axial orientation with respect to the axial shaft 1, as will be described in detail below, leaving a distance d between nut 2 and nut 2. If the device of the invention comprises more than two nuts 2, the distance d between consecutive nuts 2 will preferably be the same, particularly if the nuts 2 are of the same size.

The joint element 4 is designed with the method of the invention to achieve said passive load balancing in the device 100 of the invention. To that end, the method comprises a simulation step in which the rigidity between the nuts 2 arranged in the axial shaft 1, preferably between consecutive nuts 2, is calculated through finite element method models taking into account the axial force F caused by the load element 5 and acting on the joint element 4. In a main step of the method, the rigidity that the joint element 4 must have is defined based on the rigidity calculated in the simulation step so that said joint element 4 can transmit the corresponding axial load f1 and f2 to each nut 2 associated with the corresponding joint element 4. Optionally, the distance d between nuts can also be taken into account in the simulation step.

In the preferred embodiment of the invention, the joint element 4 comprises a hollow main body 4.1, preferably with a cylindrical section, with the axial shaft 1 and at least one portion of one of the nuts 2 being arranged inside said joint element 4. The joint element 4 also comprises fixing means 4.2 for joining said main body 4.1 to the nuts 2, as shown in Figure 1. The joint element 4 is designed to distribute the axial force F caused by the load element 5 by means of the sizing of the geometry of the main body 4.1 and the sizing and distribution of the fixing means 4.2. In a variant not shown in the drawings, the section of the main body 4.1 of the joint element 4 may comprise any non-cylindrical geometry, for example, a rectangular geometry.

Moreover, each nut 2 of the invention comprises a main body 2.2 with a cylindrical section and a fixing flange 2.1 projecting radially from the main body 2.2, as shown in Figure 1. In the preferred embodiment of the invention, the joint element 4 is fixed to the two nuts 2 through the fixing flanges 2.1 of each nut 2.

Likewise, the joint element 4 of the invention also comprises a fixing area 8 configured to be fixed to the load element 5, as shown in Figure 1, the resulting axial force F caused by the load element 5 being applied on the joint element 4 in said fixing area 8. In the non-limiting example of Figure 1, the fixing area 8 of the joint element 4 surrounds at least part of the fixing flange 2.1 of one of the nuts 2.

As seen in Figure 1, the axial shaft 1 of the device 100 of the invention comprises a locked end 6, wherein said end 6 is axially locked but with possibility of rotation, and a free end 7, wherein said end 7 is axially free and with possibility of rotation, the fixing flanges 2.1 of all the nuts 2 preferably being arranged with the same axial orientation, i.e., all the fixing flanges 2.1 are arranged in an axial position oriented towards one of the ends of the axial shaft 1, the free end 7 or the locked end 6, being preferably oriented towards the free end 7.

In a designing step of the method of the invention, the joint element 4 is designed so that it can distribute the axial force F caused by the load element 5 among the nuts 2 arranged in the axial shaft 1. The fixing means 4.2 for joining the main body 4.1 of the joint element 4 to the corresponding nuts 2 and the geometry of the section of said main body 4.1 are therefore defined in said designing step based on the rigidity defined in the main step of the method, such that the joint element 4 can distribute the axial force F caused by the load element 5 among all the nuts 2 arranged in the shaft 1, such that each nut 2 supports a predetermined axial load (f1, f2). As mentioned, if the nuts 2 are of the same size, the joint element 4 will designed in the designing step so that it can distribute the axial force F caused by the load element 5 equally among the nuts 2 arranged in the axial shaft 1.

In a non-limiting example, the fixing means 4.2 of the joint element 4 are screws or bolts, with the number of screws or bolts, their diameter, and their arrangement around the corresponding nut 2, such as for example, an equidistant arrangement, being defined in the designing step.

In another variant of the invention, the ball screw device comprises three nuts 2, as seen for example in Figures 3A or 3B. In this embodiment, the nuts 2 are also arranged in series, i.e., one after another, and with the same axial orientation with respect to the axial shaft 1, i.e., the fixing flanges 2.1 of all the nuts 2 are arranged in an axial position oriented towards one of the ends of the axial shaft 1, i.e., the free end 7 or the locked end 6. In this case, the distance d between consecutive nuts 2 is preferably the same, particularly if the nuts 2 are of the same size.

Continuing with the embodiment of the device with three nuts 2, in the non-limiting example of Figure 3A, the nuts 2 of the device 100' which cooperate with one and the same axial shaft 1 are joined to respective joint elements 4 and 4'. As seen in said figure, the first joint element 4 is fixed to the central nut 2 and to a nut 2 at the end, said first joint element 4 being configured to be fixed to the load element 5 through the fixing area 8 where the resulting axial force F caused by the load element 5 is applied. However, the second joint element 4' is fixed to the nut 2 at the other end and supported on the first joint element 4, such that the first joint element 4 transmits to the second joint element 4' the axial load f3 which the associated nut 2 must support, so that this in turn transmits said axial load f3 to the corresponding nut 2.

In this case, the rigidity of each joint element 4 and 4' is calculated in the main step of the method of the invention, and the fixing means 4.2 for joining the main body 4.1 of each joint element 4 and 4' to the corresponding nuts 2 and the section or geometry of the main body 4.1 of each joint element 4 and 4' are defined in the designing step, so that each joint element 4 and 4' can transmit the corresponding axial load (f1, f2, f3) to the associated nuts 2.

In the example of Figure 3A, the central nut 2 and the nut 2 at one end are arranged inside, or at least partially inside, the respective joint elements 4 and 4'.

Continuing with the embodiment of the device with three nuts 2, in the non-limiting example of Figure 3B, the nuts 2 of the device 100" cooperating with one and the same axial shaft 1 are joined to a single joint element 4". As seen in said figure, the joint element 4 comprises segments with different sections to allow assembling the device 100" of the invention.

## Claims

1. Ball screw device configured to move a load element (5), the device (100; 100'; 100") comprising
- an axial shaft (1) comprising a threading adapted to allow the rolling of balls (3), and
- at least two nuts (2) coupled to the shaft (1), such that with the device (100; 100'; 100") in use, the nuts (2) can move longitudinally in relation to the shaft (1) through a plurality of balls (3) comprised in each nut (2), transforming the rotary movement of the shaft (1) into a linear movement,
**characterized in that** the nuts (2) are joined to one another through a joint element (4; 4';4") which moves integrally with the nuts (2), said joint element (4; 4';4") being configured to move the load element (5), said load element (5) causing an axial force (F) on the joint element (4; 4';4"), and said joint element (4; 4';4") being designed to distribute said axial force (F) among all the nuts (2) arranged in the shaft (1), such that each nut (2) supports a predetermined axial load (f1, f2).

2. Ball screw device according to claim 1, wherein the axial load (f1, f2) supported by each nut (2) is the same.

3. Ball screw device according to claim 1 or 2, wherein the joint element (4; 4';4") comprises a main body (4.1), preferably comprising a cylindrical section, with the shaft (1) being arranged inside the joint element (4; 4';4"), and fixing means for joining said main body (4.1) to the nuts (2), the joint element (4; 4';4") being designed to distribute the axial force (F) by means of the sizing of the main body (4.1) and the sizing and distribution of the fixing means.

4. Ball screw device according to claim 3, wherein each nut (2) comprises a main body (2.2) with a cylindrical section and a fixing flange (2.1) projecting radially from the main body (2.2), the joint element (4; 4';4") being fixed to the nuts (2) through the fixing flanges (2.1).

5. Ball screw device according to claim 4, wherein the joint element (4; 4") comprises a fixing area (8) configured to be fixed to the load element (5), with the axial force (F) caused by the load element (5) being applied on the joint element (4; 4") in said fixing area (8), the fixing area (8) of the joint element (4) preferably surrounding at least part of the fixing flange (2.1) of one of the nuts (2).

6. Ball screw device according to any of the preceding claims, wherein at least one of the nuts (2) is arranged inside the joint element (4; 4';4").

7. Ball screw device according to any of the preceding claims, wherein the device (100") comprises three nuts (2).

8. Ball screw device according to claim 7, wherein the three nuts (2) are joined to a single joint element (4").

9. Ball screw device according to claim 7, wherein the nuts (2) are joined to respective joint elements (4; 4').

10. Ball screw device according to claim 9, wherein only one of the joint elements (4) is configured to be fixed to the load element (5).

11. Ball screw device according to any of the preceding claims, wherein the distance (d) between consecutive nuts (2) is the same if there are more than two nuts (2).

12. Method for designing the joint element of a ball screw device according to any of the preceding claims, **characterized in that** it comprises a simulation step in which the rigidity between nuts (2) is calculated through finite element method models taking into account the axial force (F) acting on the joint element (4; 4';4"), with the rigidity of the corresponding joint element (4; 4';4") being defined in a main step based on the rigidity calculated in the simulation step so that said joint element (4; 4';4") can transmit the corresponding axial load (f1, f2) to the associated nuts (2).

13. Method according to claim 12, wherein the method also comprises a designing step in which the fixing means for joining the main body (4.1) of the joint element (4; 4';4") to the corresponding nuts (2) and the geometry of said main body (4.1) are defined based on the rigidity defined in the main step, such that the joint element (4; 4';4") can distribute the axial force (F) among all the nuts (2) arranged in the shaft (1), such that each nut (2) supports a predetermined axial load (f1, f2).

14. Method according to claim 13, wherein in the designing step the fixing means for joining the main body (4.1) of the joint element (4; 4';4") to the corresponding nuts (2) and the section of said main body (4.1) are defined so that the axial load (f1, f2) supported by each nut (2) is the same.
